# FASCICULE DE BREVET EUROPEEN

(11) **EP 2 025 422 B1**
(45) Date de publication et mention de la délivrance du brevet: **17.02.2010**
(21) Numéro de dépôt: 08159223.0
(22) Date de dépôt: 27.06.2008
(51) Int. Cl.: B21B 27/02

(54) **Rouleau composite thermostructural**
Thermostrukturelle Verbundwalze
Thermostructural composite roller

(30) Priorité: 30.07.2007 FR 0756793
(43) Date de publication de la demande: 18.02.2009
(73) Titulaire: Snecma Propulsion Solide, 33187 Le Haillan Cedex (FR)
(72) Inventeur: Maumus, Jean-Pierre, 33160 Saint Médard en Jalles (FR)
(74) Mandataire: Desormiere, Pierre-Louis

(56) Documents cités:
- CN-A- 1 368 415
- JP-A- 2 160 546
- JP-A- 6 010 942
- JP-A- 8 155 507
- JP-A- 10 005 823
- JP-A- 57 041 811
- JP-A- 2005 140 234
- US-B1- 6 524 227

## Description

### Arrière-plan de l'invention

La présente invention se rapporte au domaine des rouleaux utilisés pour le transport, le guidage ou le façonnage de produits industriels tels que le papier, l'acier ou l'aluminium. Elle vise plus particulièrement les rouleaux destinés à être soumis à des températures et gradients de température importants.

L'industrie métallurgique ou sidérurgique utilise couramment des rouleaux pour l'élaboration de produits plats comme des tôles métalliques en acier ou en aluminium. Les rouleaux utilisés dans ce type d'industrie sont en général réalisés en acier réfractaire car les charges thermomécaniques sont très importantes comme, par exemple, dans les chambres de traitement thermique en continu de tôles métalliques (recuit) dans lesquelles les efforts mécaniques dépassent plusieurs tonnes et la température peut atteindre 850°C à 1000°C. En outre, il existe des gradients de température importants entre les rouleaux et la tôle. En effet, en entrée de chambre, les premiers rouleaux sont à la température de chauffe de la chambre (850-1000°C) alors que la tôle qui circule sur ceux-ci est à la température ambiante, ce qui conduit à la déformation du profil cylindrique du rouleau vers un profil en "diabolo". A l'inverse, les rouleaux en sortie de chambre sont à la température ambiante tandis que la tôle qui circule est encore à la température de chauffe de la chambre, ce qui conduit à la déformation du profil cylindrique du rouleau vers un profil bombé.

Par conséquent, les niveaux de température ainsi que les gradients rencontrés doivent être pris en compte lors de l'élaboration des rouleaux pour éviter soit la formation de plis dans la tôle (communément appelés ("heat buckles"), soit un mauvais guidage de celle-ci (déviation) en raison d'une déformation du rouleau sous l'effet de la température. Le passage d'une tôle sur un rouleau non cylindrique entraîne des contraintes mécaniques différentielles qui lorsqu'elles sont superposées aux autres contraintes mécaniques (traction de la tôle, masse propre, etc.) excèdent la limite élastique de la tôle et entraînent la formation de plis.

Des solutions ont été envisagées pour pallier ce problème. Parmi ces solutions, il existe celle qui consiste à utiliser des tôles d'une largeur spécifique, ce qui empêche de traiter dans une même installation des tôles de différentes largeurs.

Une autre solution consiste à utiliser des rouleaux métalliques bicouches dont une des deux couches (en général en cuivre) a pour seule fonction d'améliorer la conductivité thermique moyenne du rouleau et réduire ainsi la déformation de son profil cylindrique. Cette solution est coûteuse et ne permet pas de garantir une non déformabilité du profil du rouleau à tous les niveaux de température.

Selon encore une autre solution, des rouleaux présentent un profil à froid censé conférer un profil sensiblement rectiligne au rouleau une fois celui-ci à température.

US 6,524,227 décrit un rouleau tubulaire en matériau composite.

### Objet et résumé de l'invention

La présente invention a pour but de proposer une nouvelle structure de rouleau dont la géométrie extérieure ne varie pas sous l'effet de fortes températures et/ou lors de changements rapides de température, le rouleau ayant en outre une conception qui permet de remplacer les rouleaux existants sans modification des installations.

A cet effet, la présente invention concerne un rouleau comprenant un élément de support axial en matériau métallique comprenant au moins deux arbres et une enveloppe cylindrique en matériau composite thermostructural, caractérisé en ce qu'un jeu radial est ménagé entre l'élément de support axial et l'enveloppe cylindrique ou en ce que les surfaces de contact entre l'élément de support axial et l'enveloppe cylindrique ont un centre de symétrie coïncidant avec l'axe de ladite enveloppe.

Ainsi, la géométrie externe du rouleau selon l'invention est définie par une enveloppe cylindrique en matériau composite thermostructural, matériau qui présente un faible coefficient de dilatation thermique permettant d'éviter à l'enveloppe de se déformer sous l'effet de températures élevées. En outre, le matériau thermostructural présente une conductivité thermique élevée, ce qui permet de mettre rapidement et uniformément l'enveloppe à température et de réduire les gradients thermiques à la surface externe du rouleau. Cette bonne conductivité thermique permet ainsi d'empêcher des déformations dans la tôle lorsque la température de cette dernière est différente de celle du rouleau.

Le matériau composite thermostructural présente en outre une résistance mécanique suffisante pour résister aux charges supportées par les rouleaux de l'art antérieur.

Par ailleurs, pour permettre l'adaptation du rouleau de la présente invention dans les installations existantes (par exemple dans des installations de recuit en continu de tôles), le rouleau de l'invention conserve un élément de support axial en matériau métallique comprenant au moins deux arbres pour le support et/ou l'entraînement du rouleau. Ainsi, les parties (paliers, arbres d'accouplement, etc.) des installations destinées à coopérer avec les rouleaux n'ont pas besoin d'être modifiées pour recevoir les rouleaux de l'invention, ce qui permet un échange standard des rouleaux existants par des rouleaux selon l'invention.

Toutefois, l'élément de support axial étant en matériau métallique, il possède un coefficient de dilatation thermique plus élevé que celui de l'enveloppe cylindrique, ce qui entraîne des dilatations différentielles entre cet élément et l'enveloppe. Afin d'éviter des déformations de l'enveloppe cylindrique sous l'effet des dilatations de l'élément de support axial, le rouleau selon l'invention présente soit un jeu radial continu ménagé entre l'élément de support axial et l'enveloppe cylindrique, soit des surfaces de contact entre l'élément de support axial et l'enveloppe cylindrique ayant un centre de symétrie qui coïncide avec l'axe de ladite enveloppe.

Ainsi, les dilatations de l'élément de support axial n'entraînent pas de déformation de l'enveloppe, ces dilatations étant compensées soit dans le jeu radial présent entre le support et l'enveloppe, soit par glissement relatif entre ces deux éléments dont le centre de symétrie des portions de contact coïncide avec l'axe de l'enveloppe.

Selon un aspect de l'invention, l'enveloppe cylindrique est réalisée en matériau composite carbone/carbone qui présente à la fois un coefficient de dilatation thermique faible et une bonne conductivité thermique. D'autres matériaux composites ou thermostructuraux présentant un rapport coefficient de dilatation thermique/conductivité thermique proche de 0 peuvent également être utilisés pour réaliser l'enveloppe cylindrique tel que le matériau Invar par exemple.

L'enveloppe cylindrique peut comprendre en outre sur sa surface externe une couche de carbure de chrome, qui permet de prévenir une carburation des produits en contact avec le rouleau (par exemple des tôles). Dans ce cas, une couche de carbure de silicium peut être formée avant la couche de carbure de chrome afin de découpler thermiquement la couche de carbure de chrome du matériau composite thermostructural de l'enveloppe et de faciliter la liaison entre ces deux matériaux.

Selon un mode de réalisation de l'invention, l'élément de support axial comprend un mandrin prolongé à chaque extrémité par un arbre, l'enveloppe cylindrique étant disposée autour du mandrin, avec un jeu radial ménagé entre la surface interne de l'enveloppe et la surface externe du mandrin. De cette manière, les dilatations radiales du mandrin sont compensées par le jeu radial ménagé entre ce dernier et l'enveloppe cylindrique.

Selon un aspect de ce mode de réalisation, l'enveloppe cylindrique comprend au moins une série de dents disposées de façon annulaire sur sa surface interne tandis que le mandrin comprend une pluralité de cannelures. Cette conception permet un couplage en rotation de l'enveloppe avec le mandrin tout en conservant un jeu radial entre ces deux éléments. Des cales de réglage peuvent être disposées entre les bords adjacents des dents et des cannelures de manière à maintenir en position l'enveloppe cylindrique autour du mandrin.

Selon un autre mode de réalisation d'un rouleau selon l'invention, l'enveloppe en matériau composite thermostructural est autoporteuse et l'élément de support axial comprend deux arbres, chaque arbre étant relié à une extrémité de l'enveloppe en matériau composite thermostructural par un élément de forme tronconique. Dans ce mode de réalisation, l'enveloppe cylindrique n'est pas directement en contact avec les deux arbres constituant l'élément de support axial en matériau métallique. Les deux arbres sont respectivement couplés à l'enveloppe via deux éléments de forme tronconique définissant des surfaces de contact avec les arbres dont les génératrices (centres de symétrie) passent par un centre situé sur l'axe de symétrie de l'enveloppe. Les dilatations différentielles entre les arbres et l'enveloppe sont alors compensées dans les éléments de forme tronconique.

Les éléments de forme tronconique sont fixés, d'une part, aux extrémités de l'enveloppe cylindrique par leur extrémité de grand diamètre, et, d'autre part, aux arbres par leur extrémité de petit diamètre.

Selon encore un autre mode de réalisation d'un rouleau selon l'invention, l'enveloppe en matériau composite thermostructural est autoporteuse et l'élément de support axial comprend un mandrin prolongé à chaque extrémité par un arbre. L'enveloppe cylindrique est reliée au mandrin par deux bagues d'emmanchement coniques fixées respectivement de chaque côté du mandrin. Les génératrices des portions de contact entre les bagues et l'enveloppe cylindrique coïncident en un point situé sur l'axe de l'enveloppe, ce qui permet de compenser les dilatations différentielles entre l'enveloppe et les autres pièces du rouleau.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- la figure 1 est une vue schématique d'un rouleau composite thermostructural selon un mode de réalisation de l'invention ;
- la figure 2 est une vue en coupe selon le plan II-II de la figure 1 ;
- la figure 3 est une vue schématique d'un rouleau composite thermostructural selon un autre mode de réalisation de l'invention;
- la figure 4 est vue une éclatée d'une partie du rouleau de la figure 3 montrant le montage d'un arbre à une extrémité du rouleau ;
- la figure 5 est une vue schématique d'un rouleau composite thermostructural selon encore un autre mode de réalisation de l'invention ;
- la figure 6 représente un exemple de compensation de dilatations différentielles avec le rouleau de la figure 5 ;
- la figure 7 est une vue en coupe du rouleau de la figure 3.

### Description détaillée d'un mode de réalisation

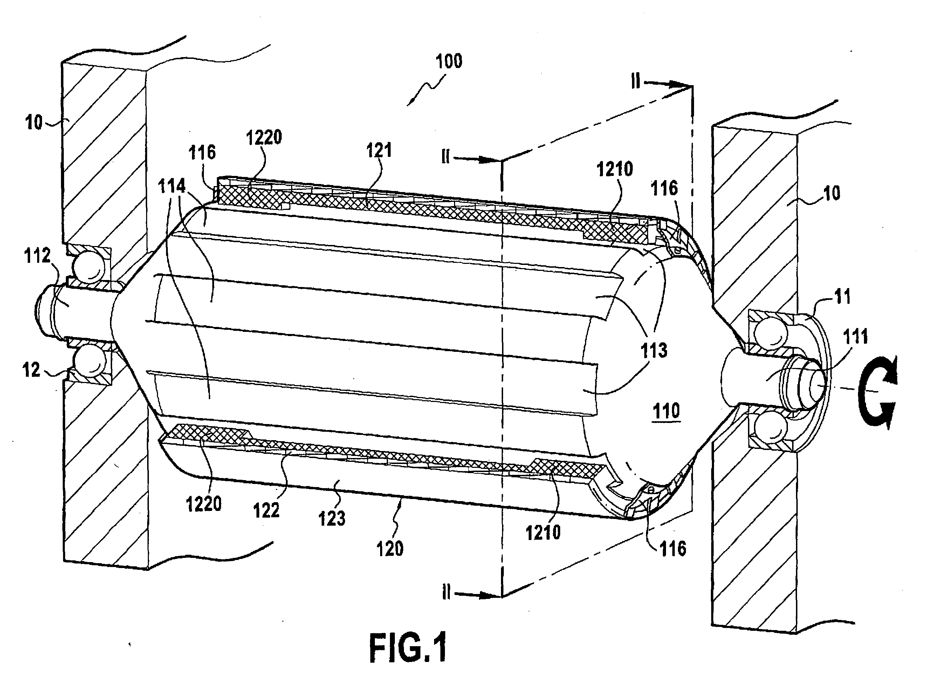

Un domaine particulier mais non exclusif d'application de l'invention est celui des installations ou lignes de recuit en continu dans lesquelles on traite des bandes de tôles métalliques. La figure 1 illustre un rouleau 100 conformément à un mode de réalisation de l'invention qui peut être utilisé indifféremment pour le transport, le guidage ou le façonnage de bande de tôles métalliques dans des lignes de recuit.

Le rouleau 100 comprend en tant qu'élément de support axial un mandrin 110 dont chaque extrémité est prolongée par un arbre 111, respectivement 112. Dans l'exemple ici considéré, le rouleau 100 est disposé à l'intérieur d'une enceinte 10 d'un four de recuit. Les arbres 111 et 112 sont respectivement supportées par des paliers 11 et 12 de l'enceinte 10. Le ou les arbres 111, 112 peuvent en outre être accouplés avec des moyens d'entraînement en rotation (non représentés).

Le rouleau 100 comprend en outre une enveloppe cylindrique 120 destinée à former la paroi externe du rouleau. L'enveloppe cylindrique 120 est constituée d'une pièce axisymétrique 121 en matériau composite thermostructural, c'est-à-dire en matériau composite ayant des bonnes propriétés mécaniques et une capacité à conserver ces propriétés à température élevée. La pièce axisymétrique 121 est de préférence réalisée en matériau composite carbone/carbone (C/C) qui, de façon connue est un matériau formé d'un renfort en fibres de carbone densifié par une matrice en carbone. Ce matériau présente un outre un faible coefficient de dilatation thermique (environ 2,5×10⁻⁶ °C) en comparaison à ceux des matériaux métalliques tels que l'acier (environ 12×10⁻⁶ °C). Par conséquent, l'enveloppe 120 constituant la partie du rouleau 100 destinée à être en contact avec les tôles à traiter se dilate très peu sous l'effet de la température.

La fabrication de pièces en matériau composite C/C est bien connue. Elle comprend généralement la réalisation d'une préforme fibreuse carbone dont la forme est voisine de celle de la pièce à fabriquer et la densification de la préforme par la matrice.

La préforme fibreuse constitue le renfort de la pièce dont le rôle est essentiel vis-à-vis des propriétés mécaniques. La préforme est obtenue à partir de textures fibreuses : fils, câbles, tresses, tissus, feutres... La mise en forme est réalisée par bobinage, tissage, empilage, et éventuellement aiguilletage de strates bidimensionnelles de tissu ou de nappes de câbles...

La densification du renfort fibreux peut être réalisée par voie liquide (imprégnation par une résine précurseur de la matrice carbone et transformation par réticulation et pyrolyse, le processus pouvant être répété) ou par voie gazeuse (infiltration chimique en phase vapeur de la matrice carbone).

Selon un aspect de l'invention, l'enveloppe cylindrique peut comprendre en outre un revêtement constitué d'une couche de carbure de chrome 123 qui permet notamment d'éviter la carburation du métal des tôles par la pièce axisymétrique 121. Dans ce cas, une couche de carbure de silicium 122 est de préférence formée entre la pièce 121 et la couche de carbure de chrome 123 pour isoler le matériau C/C de la pièce 121 du métal de la couche 123. La couche de carbure de silicium 122 joue également le rôle d'une couche de liaison entre le matériau C/C de la pièce axisymétrique 121 et la couche de carbure de chrome 123. Les couches de carbure de silicium 122 et de carbure de chrome 123 peuvent être réalisées par diverses techniques de dépôt connues comme, par exemple, le dépôt sous vide PVD ("Physical Vapor Deposition").

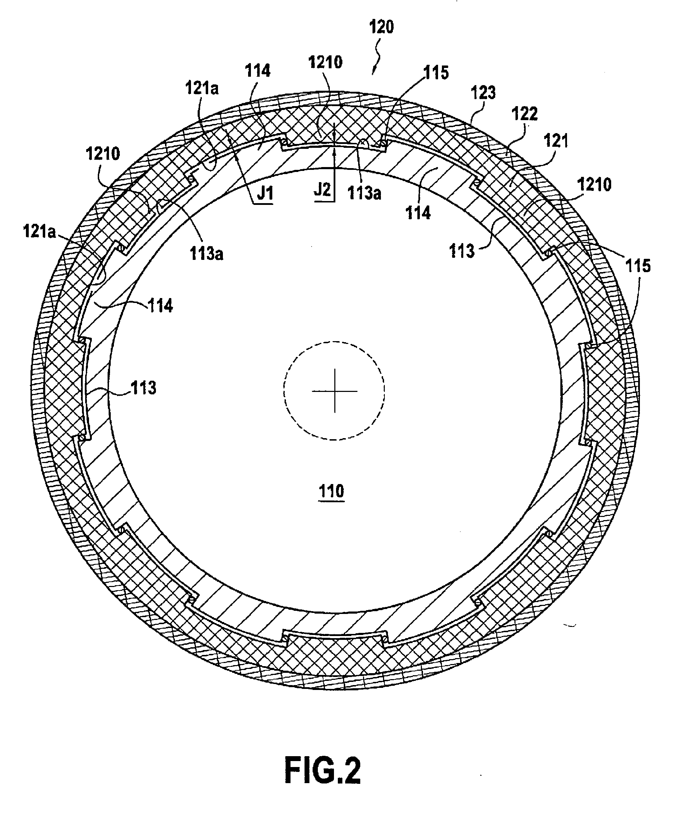

Comme illustrée sur les figures 1 et 2, la pièce 121 présente sur sa surface interne deux séries de dents 1210 et 1220, les dents 1210, respectivement 1220, étant réparties de façon annulaire sur la surface interne de la pièce 121 et alignées deux à deux suivant l'axe de la pièce axisymétrique 121. Les séries de dents 1210 et 1220 peuvent être directement formées lors de la fabrication de la pièce en matériau composite en formant un renfort fibreux comprenant des portions de surépaisseurs aux endroits correspondant aux emplacements des dents ou après la fabrication de la pièce en usinant sa surface interne.

L'enveloppe cylindrique est disposée autour du mandrin 110 en engageant les séries de dents 1210 et 1220 dans des rainures 113 formées sur la surface externe du mandrin 110, par exemple par usinage. Les rainures 113 sont réparties uniformément autour du mandrin et définissent entre elles des cannelures 114.

Comme représentée sur la figure 2, l'enveloppe cylindrique 120 est positionnée autour du mandrin 110 en ménageant un jeu radial entre les surfaces en regard de ces deux éléments. Plus précisément, le mandrin 110 et la pièce axisymétrique 121 de l'enveloppe 120 sont dimensionnés de manière à ménager, d'une part, un jeu radial J1 entre le sommet des cannelures 114 et les portions de surface interne 121a de la pièce 121 en regard de ces cannelures et, d'autre part, un jeu radial J2 entre le sommet des dents 1210 et 1220 et le fond 113a des rainures 113. Ainsi, bien que la pièce 121 en matériau composite thermostructural présente un coefficient de dilatation bien inférieur à celui du mandrin en matériau métallique, les dilatations différentielles entre ces deux éléments sont compensées grâce à la présence du jeu radial entre l'enveloppe 120 et le mandrin 110.

Lors des montées en température, le mandrin se dilate radialement dans le jeu ménagé sans exercer d'effort sur l'enveloppe, ce qui permet d'éviter la déformation de cette dernière. Dans l'exemple décrit ici, l'enveloppe 120 est maintenue en position sur le mandrin 110 au moyen de cales de réglage 115, par exemple en matériau métallique (acier), qui sont respectivement disposées entre les bords adjacents des dents 1210, 1220 et des cannelures 114. D'autres moyens de positionnement peuvent être envisagés. L'enveloppe cylindrique peut être, par exemple, maintenue en position par friction entre les bords adjacents des dents et des cannelures.

Le couplage mécanique entre l'enveloppe cylindrique 120 et le mandrin 110 est réalisé par mise en prise des dents 1210 et 1220 avec les bords adjacents des cannelures via éventuellement les cales de réglages 115 lorsqu'elles sont présentes. L'enveloppe cylindrique 120 est en outre bridée en translation sur le mandrin 110 au moyen d'éléments de maintien élastiques 116 disposés à chaque extrémité de l'enveloppe cylindrique 120. Les éléments 115 sont fixés sur le mandrin 110 tandis que les lames élastiques de ces éléments exercent un pression de maintien sur l'enveloppe. Les éléments de maintien élastiques 116 permettent de maintenir de façon équilibrée l'enveloppe cylindrique 120 en position longitudinale sur le mandrin 110.

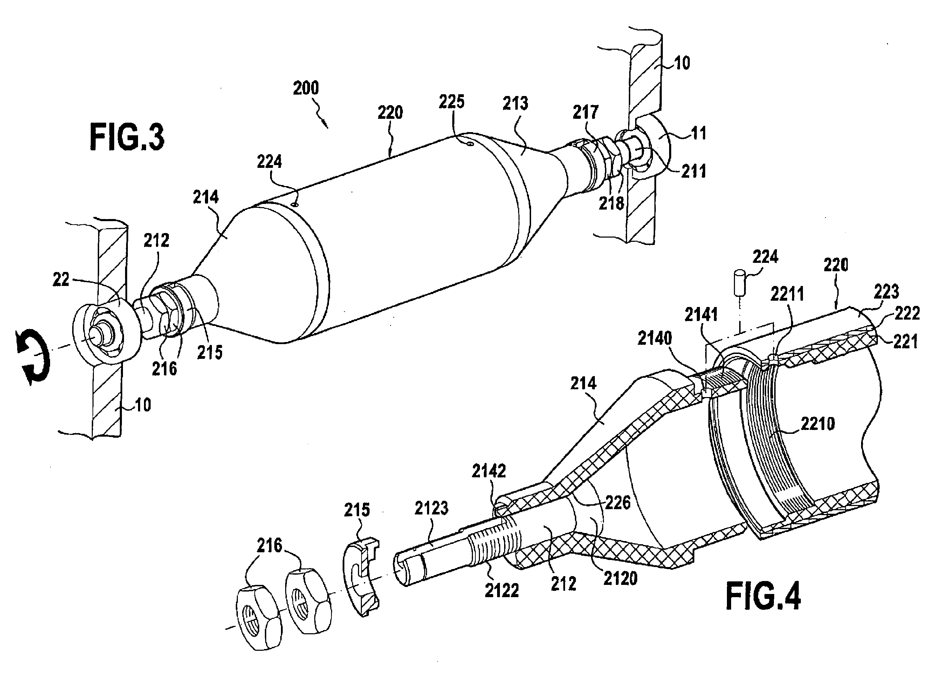

On décrit maintenant en relation avec les figures 3 et 4, un autre mode de réalisation d'un rouleau selon l'invention. Les figures 3 et 4 illustrent un rouleau 200 qui diffère notamment du rouleau 100 décrit précédemment en ce qu'il comprend enveloppe cylindrique 220 qui est autoporteuse, c'est-à-dire qui présente un structure suffisamment résistante pour supporter les efforts auxquels est soumis le rouleau sans support intérieur. A cette effet, l'enveloppe cylindrique 220 est constituée d'une pièce axisymétrique 221 réalisée en matériau composite thermostructural, de préférence en matériau C/C, qui confère à l'enveloppe une résistance mécanique suffisante pour être autoporteuse. De même que pour l'enveloppe cylindrique décrit précédemment, la pièce axisymétrique 221 peut être recouverte d'une couche de carbure de chrome 223 avec interposition d'une couche de carbure de silicium 222. Les techniques utilisées pour la réalisation de la pièce axisymétrique 221 en matériau composite thermostructural ainsi que pour les dépôts des couches de carbure de silicium 222 et de carbure de chrome 223 sont similaires à celles décrites précédemment pour l'enveloppe cylindrique 120.

Le rouleau 200 comprend deux arbres 211 et 212 respectivement supportées par des paliers 21 et 22 d'une enceinte 20 d'un four de recuit. Les arbres 211 et 212 sont respectivement reliés à l'enveloppe cylindrique 220 par des éléments tronconiques 213 et 214. Plus précisément, comme représenté sur la figure 4, l'arbre 212 est disposé à l'intérieur de l'élément tronconique 214 du côté de son extrémité de petit diamètre. L'arbre 212 présente à une extrémité une portion évasée 2120 qui joue le rôle de butée et, à l'autre extrémité, une portion filetée 2122 et une rainure 2123 dépassant à l'extérieur de l'élément tronconique 214. L'élément tronconique 214 comprend à son extrémité de grand diamètre un filetage 2141 destiné à coopérer avec un filetage 2210 réalisé sur la paroi interne de pièce axisymétrique 221. L'élément tronconique 214 est vissé sur la pièce 221 de l'enveloppe 220 puis solidarisé avec cette dernière par une goupille 224 fixée dans des orifices 2211 et 2140 formés respectivement dans l'enveloppe 220 et dans l'élément tronconique 214. L'arbre 212 est solidarisé en rotation avec l'élément tronconique 214 par un crabot 215 qui est engagé à la fois avec la rainure 2123 de l'arbre 212 et avec un ergot 2142 de l'élément tronconique 214. Le serrage du crabot ainsi que de l'arbre 212 est assuré par deux écrous 216 coopérant avec le filetage 2122 de l'arbre.

De même, l'arbre 211 est assemblé à l'autre extrémité de l'enveloppe 220 au moyen de l'élément tronconique 213 qui est vissé sur l'enveloppe 220 et solidarisé avec cette dernière par une goupille 225. Toujours de la même manière que décrite pour l'arbre 212, l'arbre 211 est solidarisé en rotation à l'élément tronconique 213 par un crabot 217 et deux écrous 218.

L'homme du métier envisagera sans difficulté d'autres variantes de réalisation pour la fixation et la solidarisation des arbres sur les éléments tronconiques.

Les arbres 211 et 212 sont réalisés en matériau métallique tel que de l'acier et les éléments tronconiques 213 et 214 sont réalisés en matériau composite thermostructural et de préférence en un matériau identique à celui de la pièce 221, à savoir ici en C/C.

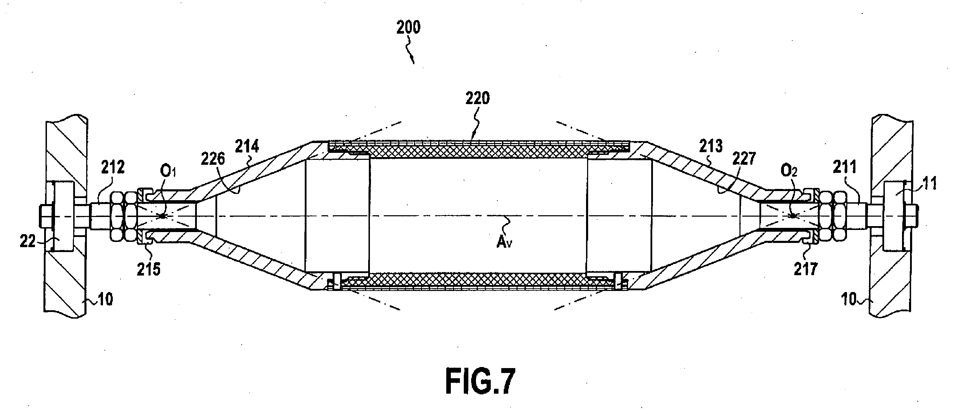

Lors de montés en température, les arbres 211 et 212 se dilatent tandis que l'enveloppe cylindrique 220 conserve son volume en raison de son faible coefficient de dilatation. Toutefois, grâce aux éléments tronconiques, les dilatations des arbres n'entraînent pas de déformation de l'enveloppe cylindrique. En effet, comme représentés sur la figure 7, les surfaces de contact 226, 227 entre les arbres et les éléments tronconiques ont chacune un centre de symétrie (génératrice) O₁, O₂ qui coïncide avec l'axe Av de l'enveloppe cylindrique et, par conséquent, du rouleau. Comme les arbres 211 et 212 se dilatent à la fois radialement et axialement, leur augmentation de volume se fait vers l'intérieur des éléments tronconiques 213 et 214 qui présentent un volume interne croissant en raison de leur forme tronconique. Ainsi, la dilatation des arbres n'entraîne pas de déformation de l'enveloppe cylindrique.

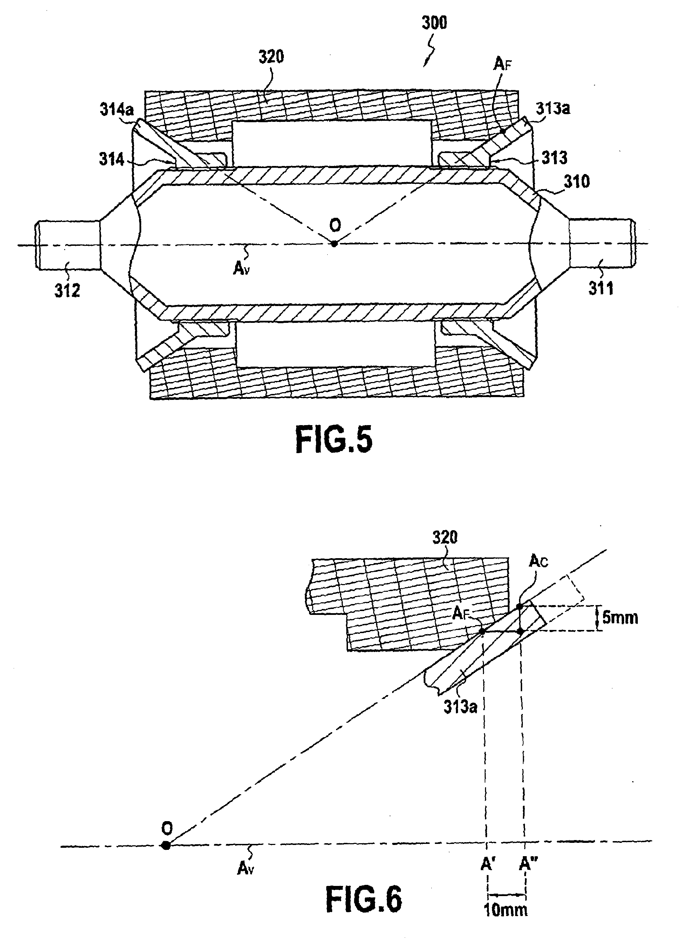

La figure 5 illustre une variante de réalisation d'un rouleau selon l'invention comprenant, comme le rouleau 200 décrit précédemment, une enveloppe cylindrique autoporteuse. Plus précisément, la figure 5 représente un rouleau 300 comprenant un mandrin 310 en acier dont chaque extrémité est prolongée par un arbre 311, respectivement 312. Le rouleau 300 comprend en outre une enveloppe cylindrique 320 autoporteuse réalisée en matériau composite thermostructural, de préférence en matériau C/C éventuellement recouvert d'une couche de carbure de chrome avec interposition d'une couche de carbure de silicium (non représentées sur la figure 5). L'enveloppe cylindrique 320 est reliée au mandrin 310 par deux bagues d'emmanchement coniques 313 et 314 qui sont respectivement vissées de chaque côté du mandrin. L'enveloppe cylindrique 320 est maintenue autour du mandrin 310 par contact avec les portions coniques 313a et 314a respectivement des bagues 313 et 314. De même que pour le rouleau 200 décrit précédemment, les dilatations différentielles entre les parties du rouleau en acier et l'enveloppe cylindrique en matériau composite thermostructural, ici du C/C, sont compensées par le fait que les parties en contact avec l'enveloppe cylindrique sont constituées par les portions coniques 313a et 314a dont les génératrices ou centres de symétrie O coïncident avec l'axe de l'enveloppe cylindrique Av.

Un exemple de ce principe de compensation est illustré sur la figure 6 qui montre les déplacements relatifs des pièces du rouleau 300 dans le cas d'une montée en température à 1000 °C environ. La tangente OA_{F} correspond à la génératrice de la portion conique 313a de la bague d'emmanchement conique 313 au niveau de sa surface de contact avec l'enveloppe cylindrique. Le point O correspond au point de coïncidence entre les génératrices des portions coniques des bagues 313 et 314 et l'axe de l'enveloppe cylindrique 320. Le mandrin est réalisé avec un acier ayant un coefficient de dilatation thermique de 10×10⁻⁶ °C tandis que l'enveloppe cylindrique est réalisée en matériau C/C qui présente un coefficient de dilatation d'environ 2,5×10⁻⁶ °C. La tangente OA_{F} correspond à l'hypoténuse d'un triangle rectangle dont les deux autres côtés sont les distances OA' et A_{F}A'. A la température de 1000°C, la portion 313a se dilate (dans le sens radial et axial), ce qui correspond à un allongement de la distance OA_{F} par déplacement du point A_{F} au point A_{C}. A cette température, la distance OA' augmente de 10 mm (distance axiale A'A") tandis que la distance A_{F}A' augmente de 5 mm (distance radiale A_{C}A"). On constate que le déplacement du point A_{F} au point A_{C} s'est fait dans le prolongement de la tangente OA_{F}, c'est-à-dire suivant la génératrice qui coïncide avec le point O situé sur l'axe du rouleau.

## Revendications

1. Rouleau (100; 200) comprenant un élément de support axial (110) en matériau métallique comprenant au moins deux arbres (111, 112; 211, 212) et une enveloppe cylindrique (120; 220) en matériau composite thermostructural, **caractérisé en ce qu'**un jeu radial continu (J1, J2) est ménagé entre les surfaces en regard de l'élément de support axial et de l'enveloppe cylindrique ou **en ce que** les surfaces de contact entre l'élément de support axial (310) et l'enveloppe cylindrique sont des surfaces coniques (226, 227) ayant un centre de symétrie (O₁, O₂) coïncidant avec l'axe (Av) de ladite enveloppe.

2. Rouleau selon la revendication 1, **caractérisé en ce que** l'enveloppe cylindrique (120; 220) est réalisée en matériau composite carbone/carbone.

3. Rouleau selon la revendication 2, **caractérisé en ce que** l'enveloppe cylindrique (120; 220) comprend sur sa surface externe une couche de carbure de chrome (123; 223).

4. Rouleau selon la revendication 3, **caractérisé en ce que** l'enveloppe cylindrique (120; 220) comprend en outre une couche de carbure de silicium (122; 222) formée sous la une couche de carbure de chrome (123; 223).

5. Rouleau selon l'une quelconque des revendications 1 à 4, **caractérisé en ce que** l'élément de support axial comprend un mandrin (110) prolongé à chaque extrémité par un arbre (111, 112) et **en ce que** ladite enveloppe cylindrique (120) est disposée autour du mandrin, un jeu radial étant ménagé entre la surface interne de l'enveloppe et la surface externe du mandrin.

6. Rouleau selon la revendication 5, **caractérisé en ce que** l'enveloppe cylindrique (120) comprend au moins une série de dents (1210; 1220) disposées de façon annulaire sur sa surface interne et **en ce que** le mandrin (110) comprend une pluralité de cannelures (114), lesdites dents étant en prise avec lesdites cannelures.

7. Rouleau selon la revendication 6, **caractérisé en ce qu'**il comprend en outre des cales de réglage (115) disposées entre les bords adjacents des dents (1210, 1220) et des cannelures (114) de manière à maintenir en position l'enveloppe cylindrique autour du mandrin.

8. Rouleau selon l'une quelconque des revendications 1 à 4, **caractérisé en ce que** l'enveloppe cylindrique (220) en matériau composite thermostructural est autoporteuse et **en ce que** l'élément de support axial comprend deux arbres (211, 212), chaque arbre étant relié à une extrémité de l'enveloppe (220) en matériau composite thermostructural par un élément de forme tronconique (213; 214).

9. Rouleau selon la revendication 8, **caractérisé en ce que** les éléments de forme tronconique (213, 214) sont fixés aux extrémités de l'enveloppe cylindrique (220) par leur extrémité de grand diamètre et **en ce que** lesdits éléments de forme tronconique sont fixés aux arbres (211, 212) par leur extrémité de petit diamètre.

10. Rouleau selon l'une quelconque des revendications 1 à 4, **caractérisé en ce que** l'enveloppe cylindrique (320) en matériau composite thermostructural est autoporteuse et **en ce que** l'élément de support axial comprend un mandrin (310) prolongé à chaque extrémité par un arbre (311, 312), l'enveloppe cylindrique (320) étant reliée audit mandrin par deux bagues d'emmanchement coniques (313, 314) fixées respectivement de chaque côté du mandrin.

## Claims

1. A roller (100; 200) comprising an axial support element made of metal and comprising at least two shafts (111, 112; 211, 212), and a cylindrical shell (120; 220) made of thermostructural composite material, the roller being **characterized in that** continuous radial clearance (J1, J2) is provided between the facing surfaces of the axial support element and the cylindrical shell or **in that** the contacting surfaces between the axial support (310) and the cylindrical shape are conical surfaces (226, 227) having a center of symmetry (O₁, O₂) which coincides with the axis (Av) of said shell.

2. A roller according to claim 1, **characterized in that** the cylindrical shell (120; 220) is made of carbon/carbon co-composite material.

3. A roller according to claim 2, **characterized in that** the cylindrical shell (120; 220) includes on its outer surface a layer of chromium carbide (123; 223).

4. A roller according to claim 3, **characterized in that** the cylindrical shell (120; 220) further includes a layer of silicon carbide (122; 222) formed under the layer of chromium carbide (123; 223).

5. A roller according to any one of claims 1 to 4, **characterized in that** the axial support element comprises a mandrel (110) extended at each end by a shaft (111, 112), and **in that** said cylindrical shell (120) is disposed around the mandrel, radial clearance being provided between the inner surface of the shell and the outer surface of the mandrel.

6. A roller according to claim 5, **characterized in that** the cylindrical shell (120) includes at least one series of teeth (1210; 1220) disposed in annular manner on its inner surface, and **in that** the mandrel (110) includes a plurality of splines (114), said teeth being engaged with said splines.

7. A roller according to claim 6, **characterized in that** it further includes adjustment spacers (115) disposed between the adjacent edges of the teeth (1210, 1220) and the splines (114) in such a manner as to hold the cylindrical shell in position around the mandrel.

8. A roller according to any one of claims 1 to 4, **characterized in that** the cylindrical shell (220) of thermostructural composite material is self-supporting and **in that** the axial support element comprises two shafts (211, 212), each shaft being connected to one end of the shell (220) of thermostructural composite material by an element of frustoconical shape (213; 214).

9. A roller according to claim 8, **characterized in that** the elements of frustoconical shape (213, 214) are fastened to the ends of the cylindrical shell (220) via their large-diameter ends and **in that** said elements of frustoconical shape are fastened to the shafts (211, 212) via their small-diameter ends.

10. A roller according to any one of claims 1 to 4, **characterized in that** the cylindrical shell (320) of thermostructural composite material is self-supporting and **in that** the axial support element comprises a mandrel (310) extended at each end by a shaft (311, 312), the cylindrical shell (320) being connected to said mandrel via two conical engagement rings (313, 314) fastened to respective ends of the mandrel.

## Patentansprüche

1. Walze (100; 200) mit einem axialen Stützelement (110) aus einem metallischen Material mit mindestens zwei Wellen (111, 112; 211, 212) und einer zylindrischen Hülle (120; 220) aus einem thermostrukturellen Verbundstoff,
**dadurch gekennzeichnet, daß**
daß zwischen den Oberflächen des axialen Stützelementes und der zylindrischen Hülle ein kontinuierliches radiales Spiel (J1, J2) gewährleistet ist oder,
daß die Kontaktflächen zwischen dem axialen Stützelement (310) und der zylindrischen Hülle konische Flächen (226, 227) sind, die ein Symmetriezentrum (O₁ O₂) besitzen, das mit der Achse (A_{V}) der Hülle übereinstimmt.

2. Walze nach Anspruch 1,
**dadurch gekennzeichnet, daß**
die zylindrische Hülle (120; 220) aus einem Kohlenstoff/Kohlenstoff-Verbundmaterial gefertigt ist.

3. Walze nach Anspruch 2,
**dadurch gekennzeichnet, daß**
die zylindrische Hülle (120; 220) auf ihrer äußeren Fläche eine Schicht aus Chromkarbid (123; 223) umfaßt.

4. Walze nach Anspruch 3,
**dadurch gekennzeichnet, daß**
die zylindrische Hülle (120; 220) ferner eine Schicht aus Siliziumkarbid (122; 222) umfaßt, die unter der Schicht aus Chromkarbid (123; 223) gebildet ist.

5. Walze nach einem der Ansprüche 1 bis 4,
**dadurch gekennzeichnet,**
**daß** das axiale Stützelement eine Drehspindel (110) umfaßt, welche an jedem Ende durch eine Welle (111, 112) verlängert ist, und
**daß** die zylindrische Hülle (120) um die Drehspindel angeordnet ist, wobei ein radiales Spiel zwischen der inneren Oberfläche der Hülle und der äußeren Oberfläche der Drehspindel gewährleistet ist.

6. Walze nach Anspruch 5,
**dadurch gekennzeichnet,**
**daß** die zylindrische Hülle (120) mindestens eine Reihe von Zähnen (1210; 1220) umfaßt, welche auf ihrer inneren Fläche ringförmig angeordnet sind, und
**daß** die Drehspindel (110) eine Mehrzahl von Längsnuten (114) umfaßt, wobei die Zähne in die Längsnuten eingreifen.

7. Walze nach Anspruch 6,
**dadurch gekennzeichnet, daß**
sie ferner Einstelleisten (115) umfaßt, welche zwischen benachbarten Kanten der Zähne (1210, 1220) und der Längsnuten (114) so angeordnet sind, daß die zylindrische Hülle um die Drehspindel in Position gehalten wird.

8. Walze nach einem der Ansprüche 1 bis 4,
**dadurch gekennzeichnet,**
**daß** die zylindrische Hülle (220) aus thermostrukturellen Verbundstoff selbsttragend ist und
**daß** das axiale Stützelement zwei Wellen (211, 212) umfaßt, wobei jede Welle an einem Ende der Schalter (220) aus einem thermostrukturellen Verbundstoff durch ein kegelstumpfförmiges Element (213; 214) verbunden ist.

9. Walze nach Anspruch 8,
**dadurch gekennzeichnet,**
**daß** die kegelstumpfförmigen Elemente (213, 214) mit ihrem Ende mit dem großen Durchmesser mit den Enden der zylindrischen Hülle (220) verbunden sind und
**daß** die kegelstumpfförmigen Elemente mit ihrem Ende mit dem kleinen Durchmesser mit der Welle (211, 212) verbunden sind.

10. Walze nach einem der Ansprüche 1 bis 4,
**dadurch gekennzeichnet,**
**daß** die zylindrische Hülle (320) aus thermostrukturellen Verbundstoff selbsttragend ist und
**daß** das axiale Stützelement eine Drehspindel (310) umfaßt, welche an jedem Ende durch eine Welle (311, 312) verlängert ist, wobei die zylindrische Hülle (320) mit der Drehspindel über zwei konische Befestigungsringe (313, 314) ist, welche jeweils mit jedem Ende der Drehspindel befestigt sind.
